# EUROPEAN PATENT APPLICATION

(11) **EP 4 006 715 A1**
(43) Date of publication of application: **01.06.2022**
(21) Application number: 20209784.6
(22) Date of filing: 25.11.2020
(51) Int. Cl.: G06F 8/34, G06F 8/36, G06F 8/71

(54) **CREATING A NATIVE APP METHOD AND SYSTEM**

(71) Applicant: Mendix Technology B.V., 3072 AP Rotterdam (NL)
(72) Inventor: Kononchuk, Mitya, 2316LA Leiden (NL); Roest, Danny, 2921 BJ Krimpen aan den IJssel (NL)
(74) Representative: Maier, Daniel Oliver

(57) **Abstract**

A computer-implemented method of creating a native app (120) and a computer system (100, 118) arranged and configured to execute the steps of the computer-implemented method are provided.

The computer-implemented method includes:
providing an app development user interface (UI) (116) of a visual model-based app development platform (118) to a user for developing the native app (120);
capturing the user's input relating to functionalities and a type of target platform (140) of the native app (120), respectively, in response to user interactions with the app development UI (116);
determining software package dependencies of the functionalities and the type of target platform (140);
importing software packages (122) corresponding to the determined software package dependencies from a remote package registry (150); and
developing the native app (120) through the app development UI (116) by using the imported software packages (122).

## Description

### Technical field

The present disclosure is directed, in general, to software management systems, in particular systems for developing native apps, that may be used to manage, build, test, deploy and iterate such native apps (collectively referred to herein as product systems).

### Background

Recently, an increasing number of computer software products is used both for personal needs and for business needs in the form of applications, throughout the present patent document simply called "apps". Such apps may be used in a mobile context as well as on cloud computing platforms and "on premise" and may provide a specific set of functions. The present invention generally relates to the development and the creation of such apps, especially of native apps which are apps targeted toward a particular platform, e.g. a mobile or desktop platform.

Currently, there exist product systems and solutions which support native app development. Such product systems may benefit from improvements.

### Summary

Variously disclosed embodiments include methods and computer systems that may be used to facilitate creating a native app.

According to a first aspect of the invention, a computer-implemented method of creating a native app may include: providing an app development user interface (UI) of a visual model-based app development platform to a user for developing the app; capturing the user's input relating to app functionalities and a type of app target platform in response to user interactions with the app development UI; determining software package dependencies of the app functionalities and the type of app target mobile platform; importing software packages corresponding to the determined software package dependencies from a remote package registry; and developing the app through the app development UI by using the imported software packages.

According to a second aspect of the invention, a computer system may be arranged and configured to execute the steps of this computer-implemented method of creating a native app. In particular, the described computer system may be arranged and configured to execute the following steps: providing an app development user interface (UI) of a visual model-based app development platform to a user for developing the app; capturing the user's input relating to app functionalities and a type of app target platform in response to user interactions with the app development UI; determining software package dependencies of the app functionalities and the type of app target mobile platform; importing software packages corresponding to the determined software package dependencies from a remote package registry; and developing the app through the app development UI by using the imported software packages.

According to a third aspect of the invention, a computer-readable medium may be encoded with executable instructions, that when executed, cause the described computer system to carry out the described method of creating a native app. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### Brief description of the drawings

Figs. 1-6 illustrate a functional block diagram of an example system that facilitates creating a native app in a product system, respectively.
Fig. 7 illustrates a flow diagram of an example methodology that facilitates creating a native app in a product system.
Fig. 8 illustrates a block diagram of a data processing system in which an embodiment can be implemented.

### Detailed description

Various technologies that pertain to systems and methods for creating a native app in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

An app generally refers to a software program which on execution performs specific desired tasks. In general, several apps are executed in a runtime environment containing one or more operating systems ("OSs"), virtual machines (e.g., supporting Java^{™} programming language), device drivers, etc.

Further a native app may be understood as an app targeted toward a particular platform, wherein this platform may be a mobile platform, e.g. a smartphone, smartwatch, handheld, pad, laptop or the like, or a desktop device, e.g. including desktop computers, or other "smart" devices, e.g. smart television sets, fridges, home or industrial automation devices, wherein smart television sets may e.g. be a television set with integrated Internet capabilities or a set-top box for television that offers more advanced computing ability and connectivity than a contemporary basic television set. The different kinds of platforms may involve different operating systems, e.g. linux, unix, iOS, macOS, Microsoft Windows or the like. For example, a native app intended for an Apple device does not run on Android devices. Contrary to native apps, many other apps are developed for multiple platforms. The main purpose for creating such native apps is to ensure best performance for a specific platform, e.g. a mobile operating system.

Apps, including native apps, can be created, edited, and represented using traditional source code. Examples of such traditional source code include C, C++, Java, Flash, Python, Perl, and other script-based methods of representing an app. Developing, creating and managing such script-based apps, or parts of such script-based apps can be accomplished by manual coding of suitably trained users.

Developers often use Application Development Frameworks ("ADFs") (which are by themselves applications or apps) for implementing/developing desired apps. An ADF provides a set of pre-defined code/data modules that can be directly/indirectly used in the development of an app. An ADF may also provide tools such as an Integrated Development Environment ("IDE"), code generators, debuggers, etc., which facilitate a developer in coding/implementing the desired logic of the app in a faster/simpler manner.

In general, an ADF simplifies app development by providing reusable components which can be used by app developers to define user interfaces ("UIs") and app logic by, for example, selecting components to perform desired tasks and defining the appearance, behavior, and interactions of the selected components. Some ADFs are based on a model-view-controller design pattern that promotes loose coupling and easier app development and maintenance.

According to another approach, apps can also be created, edited, and represented using visual model-based representations. Unlike traditional source code implementations, such apps can be created, edited, and/or represented by drawing, moving, connecting, and/or disconnecting visual depictions of logical elements within a visual modeling environment. Visual model-based representations of apps can use symbols, shapes, lines, colors, shades, animations, and/or other visual elements to represent logic, data or memory structures or user interface elements. In order to program a traditional script-based app, programmers are typically required to type out detailed scripts according to a complicated set of programming syntax rules. In contrast, programming a visual model-based app can, in some cases, be done by connecting various logical elements (e.g., action blocks and/or decision blocks) to create a visual flow chart that defines the app's operation. Similarly, defining data structures (e.g., variable types, database objects, or classes) and/or user interface elements (e.g., dropdown boxes, lists, text input boxes) in a visual model-based app can be done by drawing, placing, or connecting visual depictions of logical elements within a virtual workspace, as opposed to typing out detailed commands in a script. Visual-model based apps, including native apps, can therefore be more intuitive to program and/or edit compared to traditional script-based apps. In the present document, an approach is suggested to create or build native apps which may involve the explained visual model-based representations.

For brevity, references to a "model," a "visual model," or an "application" or "app" should be understood to refer to visual model-based apps, including native apps, unless specifically indicated. In some cases, such visual model-based apps can represent complete, stand-alone apps for execution on a computer system. Visual model-based apps can also represent discrete modules that are configured to perform certain tasks or functions, but which do not represent complete apps — instead, such discrete modules can be inserted into a larger app or combined with other discrete modules to perform more complicated tasks. Examples of such discrete modules can include modules for validating a ZIP code, for receiving information regarding current weather from a weather feed, and/or for rendering graphics.

Visual models may be represented in two forms: an internal representation and one or more associated visual representations. The internal representation may be a file encoded according to a file format used by a modeling environment to capture and define the operation of an app (or part of an app). For example, the internal representation may define what inputs an app can receive, what outputs an app can provide, the algorithms and operations by which the app can arrive at results, what data the app can display, what data the app can store, etc. The internal representation may also be used to instruct an execution environment how to execute the logic of the app during runtime. Internal representations may be stored in the form of non-human-readable code (e.g., binary code). Internal representations may also be stored according to a binary stored JSON (java script object notation) format, and/or an XML format. At runtime, an execution engine may use an internal representation to compile and/or generate executable machine code that, when executed by a processor, causes the processor to implement the functionality of the model.

The internal representation may be associated with one or more visual representations. Visual representations may comprise visual elements that depict how an app's logic flows, but which are not designed may interact with the visual representation in order to show a desired level of detail-for example, users may display or hide branches of logic, and/or display or hide sets of parameters. Details relating to an element of the visual model may be hidden from view by default but can appear in a sliding window or pop-up that appears on-screen when the user clicks on the appropriate element. Users may also zoom in or out of the model, and/or pan across different parts of the model, to examine different parts of the model. Users may also copy or paste branches of logic from one section of the model into another section, or copy/paste branches of logic from a first model into a second model. In some cases, parts of the model may contain links to other parts of the model, such that if a user clicks on a link, the user will automatically be led to another part of the model. A viewing user may interact with a visual representation in at least some of the same ways that the viewing user might interact with the model if it were displayed within a modeling environment. In other words, the visual representation may be configured to mimic how the model would appear if it were displayed within a visual modeling environment. A single internal representation may correspond to multiple visual representations that use different styles or formatting rules to display app logic. For instance, multiple visual representations corresponding to the same internal representation may differ from one another in their use of color, elements that are included or omitted, and use of symbols, shapes, lines, colors, and/or shades to depict logic flow.

Approaches involving the above-described functionalities of visual model-based representations, visual model-based apps, and/or visual models are sometimes understood to be included by a so-called low-code development platform. By way of example, such a low-code development platform may further be described as software that provides a development environment used to create application software through graphical user interfaces and configuration instead of traditional hand-coded computer programming. A low-code model may enable developers of varied experience levels to create applications using a visual user interface in combination with model-driven logic. Such low-code development platforms may produce entirely operational apps or require additional coding for specific situations. Low-code development platforms may reduce the amount of traditional hand coding, enabling accelerated delivery of business apps. A common benefit is that a wider range of people can contribute to the app's development — not only those with formal programming skills. Low-code development platforms can also lower the initial cost of setup, training, deployment, and maintenance.

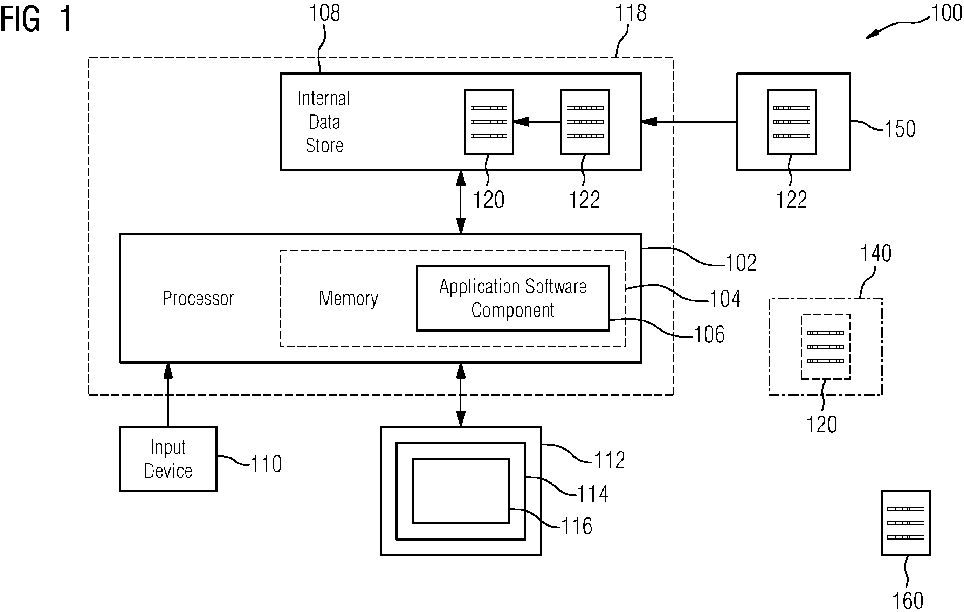

With reference to Fig. 1, a functional block diagram of an example computer system or data processing system 100 is illustrated that facilitates creating a native app 120. The processing system 100 may include a visual model-based app development platform 118 including at least one processor 102 that is configured to execute at least one application software component 106 from a memory 104 accessed by the processor 102. Herein, the visual model-based app development platform 118 may include the above-described functionalities of visual model-based representations, visual model-based apps, and/or visual models and, by way of example, be a low-code development platform. The application software component 106 may be configured (i.e., programmed) to cause the processor 102 to carry out various acts and functions described herein. For example, the described application software component 106 may include and/or correspond to one or more components of a native app development application that is configured to generate and store product data in a data store 108 such as a database. Furthermore, the described application software component 106 may include and/or correspond to one or more components of a native app creation or development application.

By way of example, the app development platform 118 may be cloud-based, internet-based and/or be operated by a provider providing native app development and creation support, including e.g. supporting low-code and/or visual model-based native app development. The user may be located close to the app development platform 118 or remote to the app development platform 118, e.g. anywhere else, e.g. using a mobile device for connecting to the native app development platform 118, e.g. via the internet, wherein the mobile device may include an input device 110 and a display device 112. In some examples, the app development platform 118 may be installed and run on a user's device, such as a computer, laptop, pad, on-premise computing facility, or the like.

Examples of product systems that may be adapted to include the native app creation and/or development features described herein may include the low-code software development platform of Mendix Inc., of Boston, Massachusetts, USA. This platform provides tools to build, test, deploy, iterate, develop, create and manage apps including native apps 120 and is based on visual, model-driven software development. However, it should be appreciated that the systems and methods described herein may be used in other product systems (e.g., PLM, PDM, ALM systems) and/or any other type of system that generates and stores product data in a database. Also, examples of databases that may be used as one or more data stores described herein include database server applications such as Oracle, Microsoft SQL Server, or any other type of data store that is operative to store data records.

It should be appreciated that it can be difficult and time-consuming to create native apps 120 in complex app development and/or management environments. For example, advanced coding or software development or management knowledge of users may be required, or selections of many options need to be made consciously, both involving many manual steps, which is a long and not efficient process.

To enable the enhanced creation of native apps 120, the described product system or processing system 100 may include at least one input device 110 and at least one display device 112 (such as a display screen). The described processor 102 may be configured to generate a graphical user interface (GUI) 114 through the display device 112. Such a GUI 114 may include GUI elements such as buttons, links, search boxes, lists, text boxes, images, scroll bars usable by a user to provide inputs through the input device 110 that cause creating a native app 120. By way of example, the GUI 114 may include a native app development UI 116 provided to a user for developing the native app 120.

In an example embodiment, the application software component 106 and/or the processor 102 may be configured to provide an app development user interface (UI) 116 of a visual model-based app development platform 118 to a user for developing the native app 120. Herein, the user relates to the user developing or creating the native app 120 and not to the native app user who runs the native app 120 on his or her target platform 140.

By way of example, the application software component 106 and/or the processor 102 may further be configured to capture the user's input relating to functionalities and a type of target platform 140 of the native app 120, respectively, in response to user interactions with the app development UI 116. Herein, the user may provide his/her input to define and configure the desired functionalities of the native app 120 which he/she is currently developing. By way of example, the user may input data sources and data consumers of the native app 120 and rules or algorithms which are applied in the framework of the native app 122 to process the data of the data sources to provide the desired data to the data consumers. Further, the user may provide input to shape the graphical user interface of the native app 120 so that the native app user has a good user experience when running the native app on his or her target platform 140. By way of example, data sources of the native app 120 may be data streams available in the internet or sensor data, e.g. from field devices of an industrial automation facility. Further, data consumers of the native app 120 may be boxes of the graphical user interface of the native app 120 including graphics and displays of the native app 120 which may display processed information derived from the data obtained from the data sources.

Further, the user may input on which type of target platform 140 the native app 120 shall eventually be deployed and/or run. The (type of) target platform 140 may, e.g., be a mobile platform, e.g. a smartphone, smartwatch, handheld, pad, laptop or the like, or a desktop device, e.g. including desktop computers, or a desktop device, e.g. including desktop computers, or other "smart" devices, e.g. smart television sets, fridges, home or industrial automation devices, wherein smart television sets may e.g. be a television set with integrated Internet capabilities or a set-top box for television that offers more advanced computing ability and connectivity than a contemporary basic television set. The different kinds of platforms may involve different operating systems, e.g. linux, unix, iOS, macOS, Microsoft Windows or the like. Herein, the native app 120 may particularly be targeted toward and suitable for a particular platform. For example, a native app 120 intended and conceived for use on an Apple device may generally not run on Android devices. Accordingly, the choice and input of the type of target platform 140 by the user is relevant for developing and creating the native app 120.

In further examples, the application software component 106 and/or the processor 102 may further be configured to determining software package dependencies of the functionalities and the type of target platform 140. The software package dependencies may, e.g., relate to "coupling" as understood in the area of software engineering, i.e. as degree of interdependence between software modules or in other words as a measure of how closely connected two routines or modules are. By way of example, for a given set of functionalities and/or a given type of target platform 140, certain software packages 122 may be required for creating or for deploying and running the native app 120 on the target platform 140. Such software package dependencies may include a range of valid software packages and/or software package versions. Accordingly, the given set of functionalities and/or the given type of target platform 140 depend on particular software packages 122 which may be determined in this step. This determination may, by way of example, be done using npm (originally short for Node Package Manager), a package manager for the Java-Script programming language, or similar tools. Herein, npm is provided by npm, Inc. of Oakland, California, USA. Alternatively, this determination may also be carried out by the visual model-based app development platform 118.

If necessary, the visual model-based app development platform 118 may further carry out an intermediate step of identifying (primary) software packages required for the functionalities and/or the type of the target platform 140 of the native app 120, respectively. Further, by way of example, the visual model-based app development platform 118 may optionally also determine the (secondary) software packages 122 on which the (primary) software packages depend.

It should also be appreciated that in further examples, the application software component 106 and/or the processor 102 may further be configured to import software packages 122 corresponding to the determined software package dependencies from a remote package registry 150. By way of example, the visual model-based app development platform 118 transmits the determined software package dependencies to the remote package registry 150 and retrieves or imports the corresponding software packages 122 from the remote package registry 150. Optionally, the visual model-based app development platform 118 may transmit information on the functionalities and/or the type of target platform 140 of the native app 120, respectively, to the remote package registry 150, in particular, if the above-mentioned determination step is to be carried out by the remote package registry 150.

Further, if necessary, also the above-mentioned primary and or secondary software packages may be imported, e.g. from the remote package registry 150.

In some examples, the application software component 106 and/or the processor 102 may further be configured to develop the native app 120 through the app development UI 116 by using the imported software packages 122. The native app 120 may be developed and eventually be completed by the visual model-based app development platform 118 taking into account the user's input provided by his/her interactions with the app development UI 116 and using the imported software packages 122. By way of example, the user's input may also include a name, an identifier, and the current version of the created native app 120. Further, the user may input required or used API keys (application programming interface keys) which are unique identifiers used to authenticate a user, developer, or a calling program to an API. Especially using the app development UI 116, the user may select splash screens, icons, funds and other layout and GUI features of the native app 120 to be developed.

The suggested approach offers several advantages over other approaches. E.g., traditional native (mobile) app development is expensive, complex, and time-consuming. Also, it generally requires expert knowledge which limits the number of potential native mobile app developers. In many approaches, a complex and technical part of native or mobile app development is the process for building the binaries, e.g. APK (Android application package) or IPA (iOS App Store Package), that will be used to publish the developed native app 120 to the app stores. This complexity is often caused by the need for complex and technical tools like Android Studio/SDK (Software Development Kit), Xcode, React native, Node.js, NPM. For example, developers needed to have a lot of knowledge of several tools, have them installed and know how to properly configure and use them.

Thanks to the suggested approach, however, developing and creating native apps 120, such as native mobile apps, becomes much easier and faster, and doable for non-technical "citizen" developers. Hence, native apps 120 may be developed and created at a lower cost: less technical and expensive persons may build native apps. It is faster to bring a native (mobile) app 120 to production, as less configuring, (manual) steps, tools, and people are needed which results in reducing the costs. Also, the efficiency increases since technical and highly skilled persons can work on other, more complex tasks. Consequently, native app building may become much more accessible to a large pool of (non-technical) developers.

Herein, the visual model-based app development platform 118 may be used to, by way of example, configure native app settings, such as the name, an ID and/or a version of the created native app 120, respectively, used splash screens, icons, fonts, API keys and available native app capabilities, e.g. which device features it uses. Furthermore, the visual model-based app development platform 118 may facilitate developing or creating native apps 120 by providing a dependency management which may be automated: e.g., based on the used integrations and UI components, the visual model-based app development platform 118 may (automatically) configure the native (mobile) app 120 to include SDKs, libraries, modules and what is needed to leverage the right platform or device capabilities.

In some examples, the software packages 122 include at least one of SDKs, libraries, software modules or any combination thereof.

Herein, SDK means Software Development Kits as already mentioned above. The software packages 122 may, e.g., include a file or directory that is described by a package.json file. Further such software packages 122 may have one of the following formats: a) A folder containing a program described by a package.json file; b) a gzipped tarball containing (a); c) A URL that resolves to (b); d) A <name>@<version> that is published on the registry with (c); e) A <name>@<tag> that points to (d); f) A <name> that has a latest tag satisfying (e); or g) A git url that, when cloned, results in (a). One or more of such software packages 122 may hence include libraries or more generally software modules.

It should also be appreciated that in some examples, the application software component 106 and/or the processor 102 may further be configured to receive updated user input relating to updated functionalities and/or an updated type of target platform 140 of the native app 120, respectively; determine updated software package dependencies of the updated functionalities and/or the updated type of target platform 140; if additional software package dependencies have been determined: import additional software packages 122' corresponding to the determined additional software package dependencies from the remote package registry 150; and update the native app 120 using the imported additional software packages 122'.

For example, during the development or creation of the native app 120 or after the completion of the native app 120, e.g. after deployment and during the operation of the native app 120 on the target platform 140, updates and amendments may be made by the user. The user may, by way of example, amend the functionalities of the native app 120 and/or the type of target platform 140 by providing corresponding input, e.g. by interacting with the app development UI 116. Such updated functionalities and/or such an updated type of target platform 140 of the native app 120, respectively, may involve amended software package dependencies. Therefore, updated software package dependencies may be determined which take into account the updated functionalities and/or the updated type of target platform 140. Herein, amended or updated software package dependencies may not only occur due to the updated functionalities and/or the updated type of target platform 140 in isolation, but may also occur due to the interplay of the updated functionalities with the previous functionalities and/or the interplay of the updated type of target platform 140 with the previous type of target platform 140.

By way of example, the determined updated software package dependencies may involve additional software package dependencies which were not yet present for the functionalities and/or type of target platform 140 of the native app 120, respectively, prior to receiving the user input relating to the updated functionalities and/or the updated type of target platform 140. Hence, in some examples, a corresponding check of the necessity of additional software package dependencies may be made. If such additional software package dependencies are determined, additional software packages 122' corresponding to the determined additional software package dependencies may be imported from the remote package registry 150. Using the imported additional software packages 122' (and if required: the previously imported software packages 122), the native app 120 may be updated, e.g. be developed by the visual model-based app development platform 118 using the imported additional software packages 122', optionally through the app development UI 116.

In some examples, it may also occur that there are updated software package dependencies involving less software packages 122 than previously. In these cases, the native app 120 may also be updated, wherein software packages which are no longer included in the software package dependencies are no longer used for the development or creation of the native app 120.

In example embodiments, the application software component 106 and/or the processor 102 may further be configured to - after the completed development of the native app 120 - redetermine software package dependencies of the functionalities and the type of target platform 140 of the native app 120, respectively; if additional software package dependencies have been determined: import additional software packages 122' corresponding to the additional software package dependencies from the remote package registry 150; and update the native app 120 using the imported additional software packages 122'.

Once the development or creation of the native app 120 has been completed and optionally, the native app 120 has been deployed and is operated on the target platform 140, updates and amendments influencing or affecting the native app 120 may occur which may be driven by stakeholders other than the user or developer of the native app 120. For example, such updates may be made by a remote app store 154 at which the native app 120 is available for download by native app users. Further, such updates may, in some examples, also be made to software packages used for the development or creation of the native app 120. Such software packages may, e.g., be related to resolved software package vulnerabilities or improved software package functionalities. There may be further updates made to the development, deployment, or operational environment of the native app 120 which may require updating the native app 120 to ensure further convenient and secure operation and use of the native app 120. Such kinds of amendments or updates may involve additional software package dependencies. Therefore, software package dependencies may be redetermined which take into account the functionalities and/or the type of target platform 140 and the latest status of the corresponding software packages, e.g. relating to the development, deployment, or operational environment of the native app 120.

By way of example, the redetermined software package dependencies may involve additional software package dependencies which were not yet present for the previous status of the development, deployment, or operational environment of the native app 120. Hence, in some examples, a corresponding check of the necessity of additional software package dependencies may be made. If such additional software package dependencies are determined, additional software packages 122' corresponding to the determined updated software package dependencies may be imported from the remote package registry 150. Using the imported additional software packages 122'(and if required: the previously imported software packages 122), the native app 120 may be updated, e.g. be developed and/or created by the visual model-based app development platform 118 using the imported additional software packages 122', optionally through the app development UI 116. In some examples, the update of the native app 120 may be performed automatically, e.g. without further input or intervention of the user.

In some examples, it may also occur that there are updated software package dependencies involving less software packages 122 than previously. In these cases, the native app 120 may also be updated, wherein software packages which are no longer included in the software package dependencies are no longer used for the development or creation of the native app 120.

Thanks to the described update features, the visual model-based app development platform 118 may realize an auto-updating functionality. E.g., if remote app store 154 requirements change (which often happens), the native app 120 may be upgraded automatically, and the app development UI 116 is updated automatically to show new/required settings if needed.

In some examples, the application software component 106 and/or the processor 102 may further be configured to - if additional updated software package dependencies have been determined - display the possibility of an update of the native app 120 to a user with the app development UI 116; capture the user's input relating to the displayed possible native app 120 update in response to user interactions with the app development UI 116; only if the user agrees to the possible native app 120 update: import the additional software packages 122' corresponding to the determined additional software package dependencies from the remote package registry 150; and updating the native app 120 using the imported additional software packages 122'.

These examples may, e.g., occur when a user inputs updated functionalities and/or an updated type of target platform 140 of the native app 120, respectively, as explained above. Also, these examples may occur when updates are made to the development, deployment, or operational environment of the native app 120 as explained above. If such additional software package dependencies have been determined, the possibility of an update of the native app 120 may be displayed to a user with the app development UI 116. The displayed information may include information on the additional software packages 122', such as name, author, file size, licensing conditions, information on vulnerabilities and/or dependencies, or the like of the respective additional software package. Further, the displayed information may include whether the possible update is only recommended or actually required, e.g. for avoiding severe vulnerabilities or other severe issues. By way of example, the severity may be determined by determining whether the respective additional software package 122' is only recommended or actually required, e.g. to resolve a severe vulnerabilities or other severe issues. This displayed information may help the user to make a conscious decision whether the respective additional software package 122' shall be imported or the corresponding update shall be dismissed. The user may then input his/her agreement or rejection of the update through user interactions with the app development UI 116. To this end, e.g. an "accept" and a "reject" button may be displayed on the app development UI 116 and the user may click on one of the two buttons to provide his/her input.

Only if the user agrees to the possible native app 120 update, the additional software packages 122' corresponding to the determined additional software package dependencies are imported from the remote package registry 150. Using the imported additional software packages 122'(and if required: the previously imported software packages 122), the native app 120 may be updated, e.g. be developed by the visual model-based app development platform 118 using the imported additional software packages 122', optionally through the app development UI 116.

It should also be appreciated that in some examples, the application software component 106 and/or the processor 102 may further be configured to determine or redetermine software package dependencies of the functionalities and the type of target platform 140 of the native app 120, respectively, with a given frequency.

Determining or redetermining the software package dependencies may be done with a given frequency, e.g. every minute, once per several minutes, or once per hour. I.e., the first frequency may, by way of example, be comparably high. In most examples, however, a frequency of once per day or less often may be sufficient. In some examples, the given frequency may be configurable by a user or administrator. In other examples, the given frequency may be adapted automatically depending on activity patterns or most recent activities with respect to possible updates. E.g., if there is very little (or much) activity, the given frequency may be comparably low (or high).

In example embodiments, the application software component 106 and/or the processor 102 may further be configured to determine or redetermine software package dependencies of the functionalities and the type of target platform 140 of the native app 120, respectively, if a given event occurs, the given event preferably including any one of an update of the functionalities and/or of an update of the type of target platform 140 of the native app 120, respectively, by the user, availability of an updated software package 122' for a software package 122 with a software vulnerability, availability of an updated software package 122' for a software package 122 with an upcoming software package expiry date, change of licensing conditions of the software packages 122, or any combination thereof.

Determining or redetermining the software package dependencies may be done event-triggered. In some examples, such a triggering event is an event which may make the update of the native app 120 possible or even necessary. Such an event may, e.g., be the update of the functionalities and/or of an update of the type of target platform 140 of the native app 120, respectively, by the user. Hence, such an event may be user-induced. In other examples, such an event may be induced by the development, deployment, or operational environment of the native app 120. By way of example, the availability of an updated software package 122' may be such an event if the previously used software package 122 has a software vulnerability which is resolved by the updated software package 122'. Such an event may also be the availability of an updated software package 122' if the previously used software package 122 has an upcoming software package expiry date and the updated software package 122' replaces the expiring software package 122. There may be other events relating to the software packages 122 which may make the update of the native app 120 possible or even necessary. In some examples, these events relating to the software packages 122 relates to amendments of libraries, settings, versions, dependencies, licensing conditions (e.g., from non-commercial to commercial), or the like of the software packages 122 or parts of it.

In some examples, the application software component 106 and/or the processor 102 may further be configured to develop the native app 120 through the app development UI 116 by using the imported software packages 122 by including to create, by the visual model-based app development platform 118, source code 124 of the developed native app 120, wherein the application software component 106 and/or the processor 102 may further be configured to cause a binary building platform 126 to build at least one binary file 128 corresponding to the source code 124 of the developed native app 120.

In most examples, the above-mentioned development or creation of the native app 120 may include creating source code 124 of the developed native app 120 by the visual model-based app development platform 118. The source code 124 may be made available to a binary building platform 126 which, in most examples, is part of the visual model-based app development platform 118. Hence, the binary building platform 126 may be integrated in the visual model-based app development platform 118. The binary building platform 126 may be provided with the source code 124 of the developed native app 120 and may then build at least one binary file 128 corresponding to the source code 124 of the native app 120.

Herein, the respective binary file 128 may sometimes be referred to as executable code, executable file, or executable program, or sometimes simply referred to as an executable or binary, and may generally cause a computer or processor to perform indicated tasks according to encoded instructions, as opposed to a data file that must be parsed by a program to be meaningful. Hence, in the context of the present invention, the respective binary file 128 may cause the target platform 140 to download, install, deploy, run and/or operate the native app 120 to/on the target platform 140.

After the creation of the respective binary file 128 by the binary building platform 126, the binary building platform 126 may provide the respective, created binary file 128 to the visual model-based app development platform 118, e.g. to its data store 108.

In some examples, the binary building platform 126 may be a remote platform. In these examples, the visual model-based app development platform 118 may first provide the source code 124 to the remote binary building platform 126 which then creates the respective, corresponding binary file 128 which may eventually be sent back from the remote binary building platform 126 to the visual model-based app development platform 118. By way of example, the App Center from Microsoft Corp. of Redmond, Washington, USA, may include the required functionalities of such a binary building platform 126.

If the binary building platform 126 is integrated in the visual model-based app development platform 118, it may provide similar functionalities that allow to create a respective binary file 128 corresponding to the input source code 124 of the developed native app 120. Such an integrated binary building platform 126 may be particularly convenient for a user aiming to develop or create a native app 120 since no separate installation or set up of additional software may be required. Rather, the user may use the app development UI 116 to conveniently trigger the creation of the respective binary file 128 which may then be completed by the binary building platform 126 which is integrated in the visual model-based app development platform 118. To this end, the app development UI 116 may include a corresponding "create binary" button which the user may click to trigger the creation of the respective binary file 128.

In some examples, by integrating the binary building platform 126 in the visual model-based app development platform 118, building as a service may be realized. Contrary to traditional development where developers have to use Android Studio and/or Xcode (and a Mac) to build the binaries 128, in these examples, users may directly build binaries 128 with the visual model-based app development platform 118 may create and without having to use these external tools. Also, users may directly download or install the respective binary 128 on their target platform 140, e.g. their mobile device, e.g., by scanning a QR code.

It should also be appreciated that in some examples, the application software component 106 and/or the processor 102 may further be configured to transmit or cause to transmit the source code 124 and/or the respective binary file 128 to a remote software repository 152; and to cause the remote software repository 152 to make the source code 124 and/or the respective binary file 128 available for download.

The remote software repository 152 may, in some examples, provide a version management of the native app 120, the corresponding source code 124, and/or the respective binary file 128 (and its different versions) transmitted it. To this end, the corresponding files are sent from the visual model-based app development platform 118 and/or the binary building platform 126 to the remote software repository 152.

Further, the remote software repository 152 may make the source code 124 and/or the respective binary file 128 available to users who want to download the corresponding file(s). Such a remote software repository 152 may, e.g., be provided by GitHub, Inc. from San Francisco, California, USA which offers services to facilitate the version control and issue tracking aspects of software development. For version control, Git (and by extension GitHub.com) allows pull requests to propose changes to the source code. Users with the ability to review the proposed changes can see a diff of the requested changes and approve them. In Git terminology, this action is called "committing" and one instance of it is a "commit".

The remote software repository 152 may, in some examples, be used to facilitate developing or creating the native app 120, especially for teams of users, and may, in some examples, be used to provide a suitable format of the native app 120 for download and eventually for deployment, installation and/or operation of the native app 120 to the target platform 140.

In example embodiments, the application software component 106 and/or the processor 102 may further be configured to transmit metadata 130 relating to the developed native app 120 to the remote software repository 152, wherein the metadata 130 includes at least one of an app name, an app ID, an app version, source code name, source code ID, respective binary file name, respective binary file ID, API keys, app functionalities, a type of target platform, software package dependencies, updated app functionalities, an updated type of target platform, updated software package dependencies, or any combination thereof.

Corresponding data may also be provided to the binary building platform 126.

In some examples, the application software component 106 and/or the processor 102 may further be configured to cause to transmit or transmitting the respective binary file 128 to a remote app store 154 for download of the native app 120 by a native app user.

The native app 120 may be made available by the usual model-based app development platform 118 and/or the binary building platform 126 to a native app user app for download, installation and/or deployment of the native app 120 and then optionally, for running and/or operation of the native app 120 on the target platform 140. Herein, the native app 120 may be transmitted in the form of the respective binary file 128. Further, the remote app store 154 may be one of the well-known app stores of one of the large app store operators.

It should also be appreciated that in some examples, the application software component 106 and/or the processor 102 may further be configured to provide the respective binary file 128 to an app user via a machine-readable optical label allowing the app user to download the native app 120 to his/her target platform 140.

In some examples, the machine-readable optical label may be a barcode, e.g., a one-dimensional or two-dimensional barcode such as a QR code (abbreviated from Quick Response code) or another type of matrix barcode.

Further, a computer-readable medium 160 is shown in Fig. 1 which is encoded with executable instructions, that when executed, cause the computer system 100 and/or the usual model-based app development platform 118 to carry out the described method.

It should also be appreciated that in some examples, the visual model-based app development platform 118 may provide functionalities related to certificate generation through the app development UI 116. Such certificates may be requested and generated when distributing the native app 120. Traditionally the certificate generation involves a complex flow and using command line tooling.

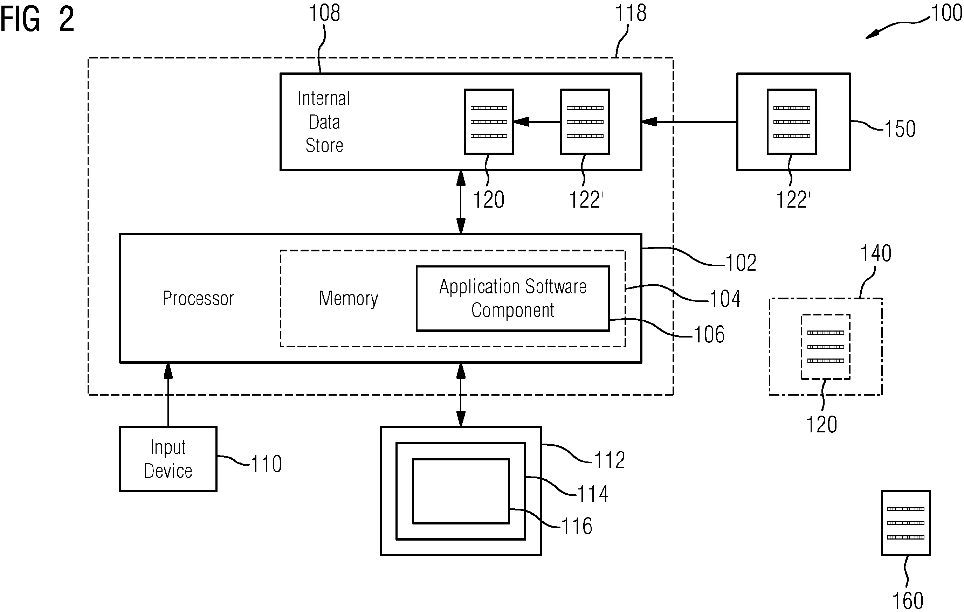

Fig. 2 illustrates a functional block diagram of another example system that facilitates creating a native app 120 in a product system 100. Like in the other illustrated and explained example systems, the processing system 100 may include a visual model-based app development platform 118 including at least one processor 102 that is configured to execute at least one application soft-ware component 106 from a memory 104 accessed by the processor 102. Herein, the visual model-based app development platform 118 may include the above-described functionalities of visual model-based representations, visual model-based apps, and/or visual models and especially a low-code development platform.

As illustrated in Fig. 2, additional software packages 122' are imported from the remote package registry 152 to the visual model-based app development platform 118. In some examples, this is made after receiving updated user input relating to updated functionalities and/or an updated type of target platform 140 of the native app 120, respectively. In these examples, updated software package dependencies of the updated functionalities and/or the updated type of target platform 140 are determined and the mentioned import is done if additional software package dependencies have been determined. Herein, the imported additional software packages 122' correspond to the determined additional software package dependencies and are used to update the native app 120.

In some examples, this import is made after completion of the development of the native app 120. In these examples, software package dependencies of the functionalities and the type of target platform 140 of the native app 120, respectively are redetermined and the mentioned import is done if additional software package dependencies have been determined. Herein, the imported additional software packages 122' correspond to the additional software package dependencies and are used to update the native app 120.

It should also be appreciated that in further examples, the possibility of an update of the native app 120 may be displayed to a user with the app development UI 116. The user's input relating to the displayed possible native app 120 update may be captured in response to the user's interaction with the app development UI 116. In some examples, only if the user agrees to the possible native app 120 update, the additional software packages 122' corresponding to the determined additional software package dependencies may be imported from the remote package registry 150 and the native app 120 may be updated using the imported additional software packages 122'.

Further, software package dependencies of the functionalities and the type of target platform 140 of the native app 120, respectively, may be determined or redetermined with a given frequency and/or if a given event occurs.

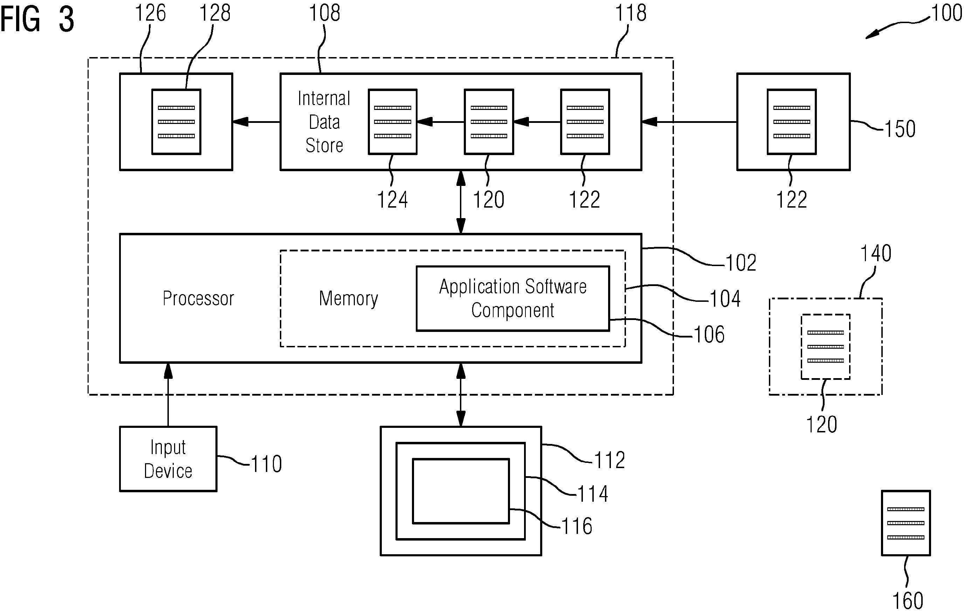

Fig. 3 illustrates a functional block diagram of another example system that facilitates creating a native app 120 in a product system 100. Herein, the visual model-based app development platform 118 creates source code 124 of the developed native app 120 when developing the native app 120 through the app development UI 116 by using the imported software packages 122. Furthermore, the visual model-based app development platform 118 includes a binary building platform 126 which builds a binary file 128 corresponding to the source code 124 of the developed native app 120.

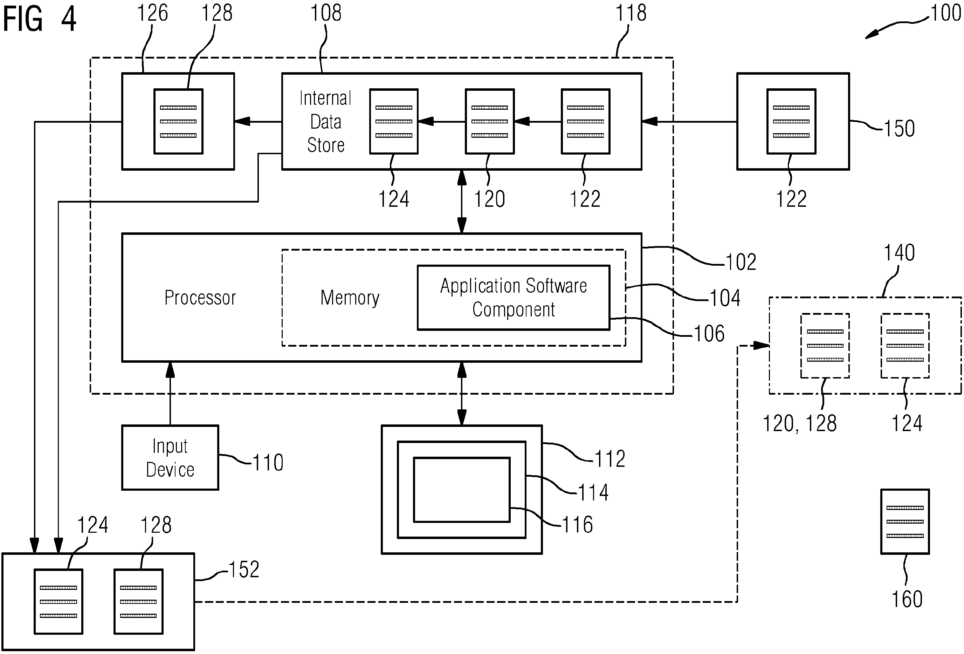

Fig. 4 illustrates a functional block diagram of another example system that facilitates creating a native app 120 in a product system 100. The product system 100 further includes a remote software repository 152 to which the visual model-based app development platform 118 may transmit the source code 124 and the binary file 128. The remote software repository 152 may then make the source code 124 and the binary file 128 available for download, e.g., to the target platform 140 or some other computing device. In some examples, only the binary file 128 may be downloaded to the target platform 140. In further examples, the native app 120 may basically correspond to the binary file 128 of the native app 120.

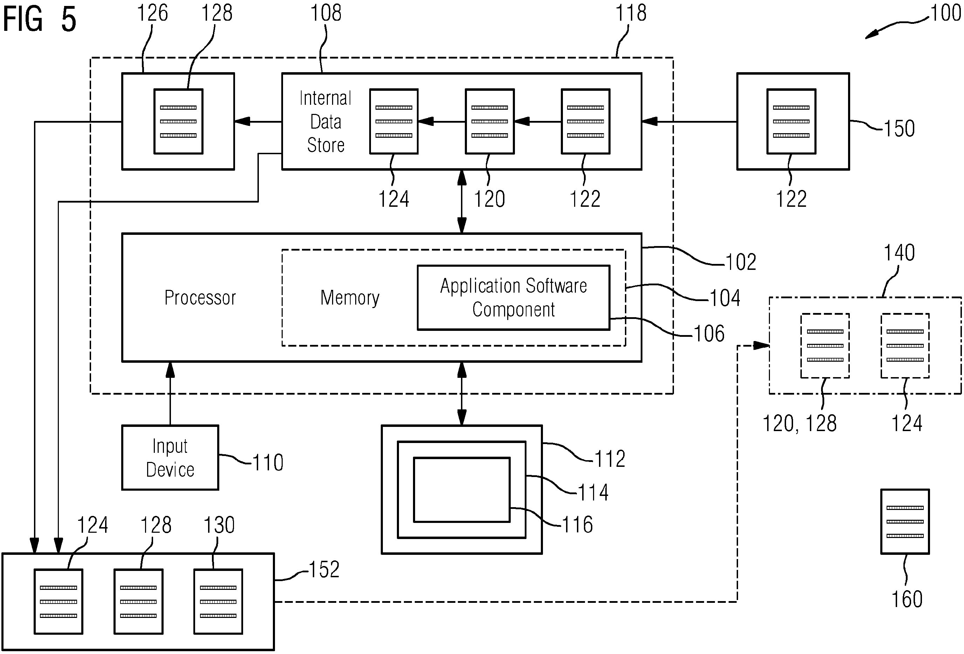

Fig. 5 illustrates a functional block diagram of another example system that facilitates creating a native app 120 in a product system 100. The visual model-based app development platform 118 may further transmit metadata 130 relating to the developed native app 120 to the remote software repository 152. In some examples, only the binary file 128 may be downloaded, e.g., to the target platform 140 or some other computing device. In further examples, the native app 120 may basically correspond to the binary file 128 of the native app 120.

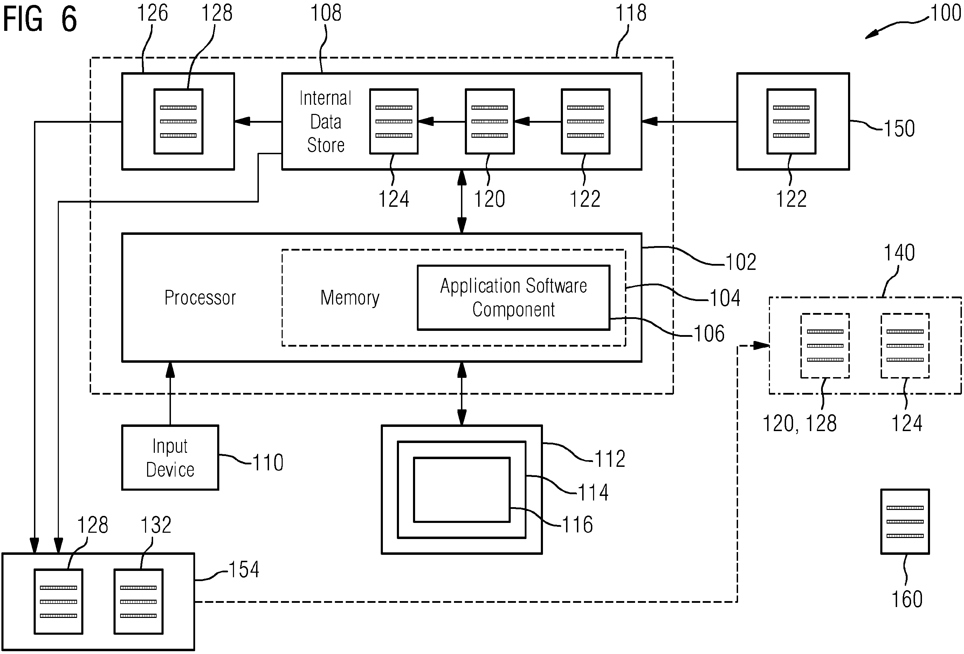

Fig. 6 illustrates a functional block diagram of another example system that facilitates creating a native app 120 in a product system 100. The product system 100 further includes a remote app store 154 to which the visual model-based app development platform 118 may transmit the source code 124 and the binary file 128. The remote app store 154 may then make the source code 124 and the binary file 128 available for download to the target platform 140. In some examples, only the binary file 128 may be downloaded to the target platform 140. In further examples, the native app 120 may basically correspond to the binary file 128 of the native app 120.

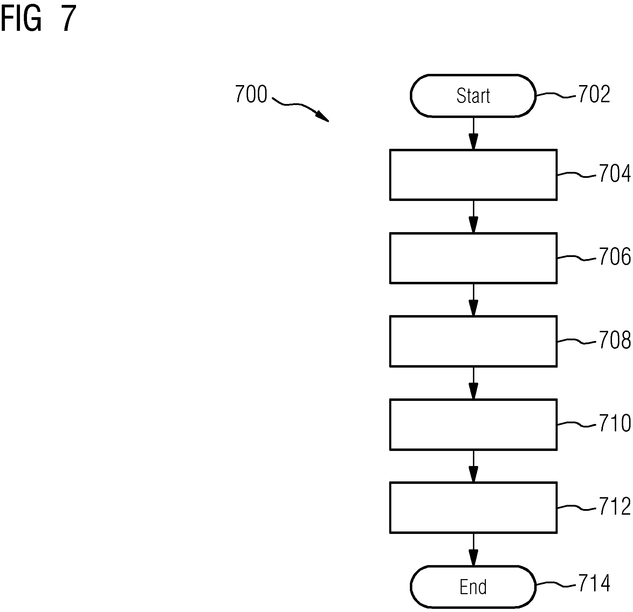

Fig. 7 illustrates a flow diagram of an example methodology 700 that facilitates creating a native app 120 in a product system 110, 118. The method may start at 702 and the methodology 700 may include several acts carried out through operation of at least one processor.

These acts may include an act 704 of providing an app development user interface (UI) 116 of a visual model-based app development platform 118 to a user for developing the native app 120; an act 706 of capturing the user's input relating to functionalities and a type of target platform 140 of the native app 120, respectively, in response to user interactions with the app development UI 116; an act 708 of determining software package dependencies of the functionalities and the type of target platform 140; an act 710 of importing software packages 122 corresponding to the determined software package dependencies from a remote package registry 150; and an act 712 of developing the native app 120 through the app development UI 116 by using the imported software packages 122. At 714 the methodology may end.

It should be appreciated that the methodology 700 may include other acts and features discussed previously with respect to the computer-implemented method of creating a native app.

For example, the methodology 700 may further include the acts of receiving updated user input relating to updated functionalities and/or an updated type of target platform 140 of the native app 120, respectively; determining updated software package dependencies of the updated functionalities and/or the updated type of target platform 140; if additional software package dependencies have been determined: importing additional software packages 122' corresponding to the determined additional software package dependencies from the remote package registry 150; and updating the native app 120 using the imported additional software packages 122'.

Further, the methodology 700 may further include - after the completed development of the native app 120- the acts of redetermining software package dependencies of the functionalities and the type of target platform 140 of the native app, respectively; if additional software package dependencies have been determined: importing additional software packages 122' corresponding to the additional software package dependencies from the remote package registry 150; and updating the native app 120 using the imported additional software packages 122'.

Example embodiments of the methodology 700 may also include - if additional software package dependencies have been determined - the acts of displaying the possibility of an update of the native app 120 to a user with the app development UI 116; capturing the user's input relating to the displayed possible native app 120 update in response to user interactions with the app development UI 116; only if the user agrees to the possible native app 120 update: importing the additional software packages 122' corresponding to the determined additional software package dependencies from the remote package registry 150; and updating the native app 120 using the imported additional software packages 122'.

Example embodiments of the methodology 700 may also include the act of determining or redetermining software package dependencies of the functionalities and the type of target platform 140 of the native app 120, respectively, with a given frequency.

Further examples of the methodology 700 may further include the act of determining or redetermining software package dependencies of the functionalities and the type of target platform 140 of the native app 120, respectively, if a given event occurs, the given event preferably including any one of update of the functionalities and/or of an update of the type of target platform 140 of the native app 120, respectively, by the user, availability of an updated software package 122' for a software package 122 with a software vulnerability, availability of an updated software package 122' for a software package 122 with an upcoming software package expiry date, change of licensing conditions of the software packages 122, or any combination thereof.

For example, the methodology 700 may further include the acts of developing the native app 120 through the app development UI 116 by using the imported software packages 122 including creating, by the visual model-based app development platform 118, source code 124 of the developed native app 120; and causing a binary building platform 126 to build at least one binary file 128 corresponding to the source code 124 of the developed native app 120.

Further, the methodology may further include the acts of transmitting or causing to transmit the source code 124 and/or the respective binary file 128 to a remote software repository 152; and causing the remote software repository 152 to make the source code 124 and/or the respective binary file 128 available for download to the target platform 140.

Example embodiments of the methodology may also include the act of transmitting metadata 130 relating to the developed native app 120 to the remote software repository 152, wherein the metadata 130 includes at least one of an app name, an app ID, an app version, source code name, source code ID, respective binary file name, respective binary file ID, API keys, app functionalities, a type of target platform, software package dependencies, updated app functionalities, an updated type of target platform, updated software package dependencies, or any combination thereof.

Further examples of the methodology may further include the act of causing to transmit or transmitting the respective binary file 128 to a remote app store 154 for download of the native app 120 by a native app user.

Example embodiments of the methodology may also include the act of providing the respective binary file 128 to an app user via a machine-readable optical label allowing the app user to download the native app 120 to his/her target platform 140.

As discussed previously, acts associated with these methodologies (other than any described manual acts such as an act of manually making a selection through the input device) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frame-works such as Java, JavaScript, Python, C, C#, C++ or any other software tool capable of producing components and graphical user interfaces configured to carry out the acts and features described herein.

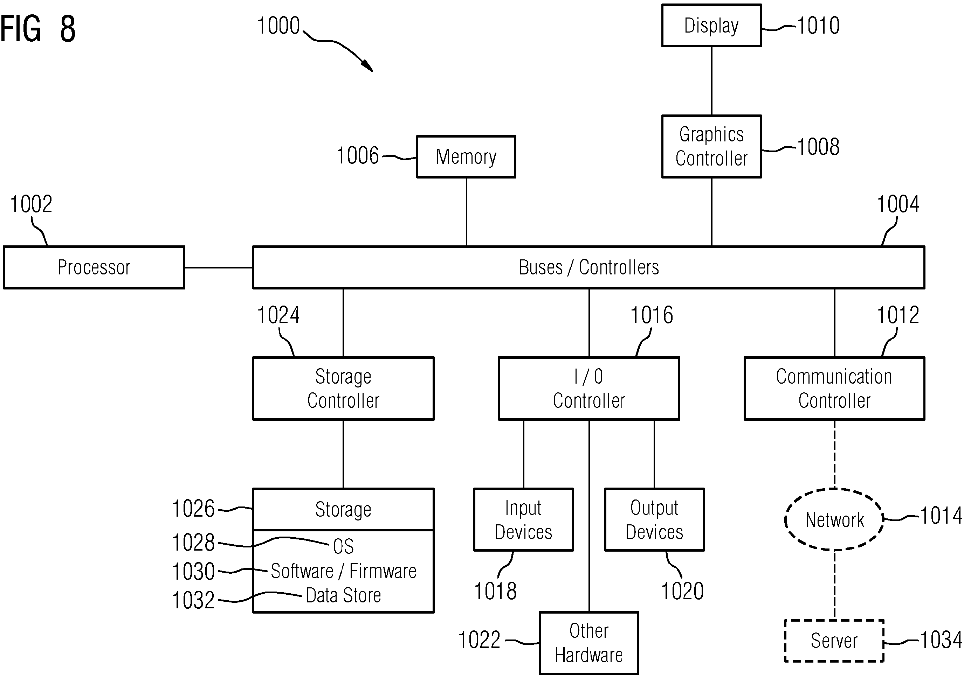

Fig. 8 illustrates a block diagram of a data processing system 1000 (also referred to as a computer system) in which an embodiment can be implemented, for example, as a portion of a product system, and/or other system operatively configured by software or otherwise to per-form the processes as described herein. The data processing system 1000 may include, for example, the app development platform 118 and/or the computer system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input and display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machine-readable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present patent document should be read as implying that any particular element, step, act, or function is an essential element, which must be included in the claim scope: the scope of patented subject matter is defined only by the allowed claims.

## Claims

1. Computer-implemented method of creating a native app (120), including:
providing an app development user interface (UI) (116) of a visual model-based app development platform (118) to a user for developing the native app (120);
capturing the user's input relating to functionalities and a type of target platform (140) of the native app (120), respectively, in response to user interactions with the app development UI (116);
determining software package dependencies of the functionalities and the type of target platform (140);
importing software packages (122) corresponding to the determined software package dependencies from a remote package registry (150); and
developing the native app (120) through the app development UI (116) by using the imported software packages (122).

2. Computer-implemented method according to claim 1, wherein the software packages (122) include at least one of SDKs, libraries, software modules or any combination thereof.

3. Computer-implemented method according to any one of the preceding claims, further including:
receiving updated user input relating to updated functionalities and/or an updated type of target platform (140) of the native app (120), respectively;
determining updated software package dependencies of the updated functionalities and/or the updated type of target platform (140);
if additional software package dependencies have been determined:
importing additional software packages (122') corresponding to the determined additional software package dependencies from the remote package registry (150); and
updating the native app (120) using the imported additional software packages (122').

4. Computer-implemented method according to any one of the preceding claims, further including after the completed development of the native app (120):
redetermining software package dependencies of the functionalities and the type of target platform (140) of the native app (120), respectively;
if additional software package dependencies have been determined:
importing additional software packages (122') corresponding to the additional software package dependencies from the remote package registry (150); and
updating the native app (120) using the imported additional software packages (122').

5. Computer-implemented method according to claim 3 or 4, further including, if additional software package dependencies have been determined:
displaying the possibility of an update of the native app (120) to a user with the app development UI (116);
capturing the user's input relating to the displayed possible native app (120) update in response to user interactions with the app development UI (116);
only if the user agrees to the possible native app (120) update:
importing the additional software packages (122') corresponding to the determined additional software package dependencies from the remote package registry (150); and
updating the native app (120) using the imported additional software packages (122').

6. Computer-implemented method according to claim 4 or 5, further including:
determining or redetermining software package dependencies of the functionalities and the type of target platform (140) of the native app (120), respectively, with a given frequency.

7. Computer-implemented method according to any of claim 3 to 6, further including:
determining or redetermining software package dependencies of the functionalities and the type of target platform (140) of the native app (120), respectively, if a given event occurs,
the given event preferably including any one of update of the functionalities and/or of an update of the type of target platform 140 of the native app 120, respectively, by the user, availability of an updated software package (122') for a software package (122) with a software vulnerability, availability of an updated software package (122') for a software package (122) with an upcoming software package expiry date, change of licensing conditions of the software packages (122), or any combination thereof.

8. Computer-implemented method according to any one of the preceding claims, wherein the step of developing the native app (120) through the app development UI (116) by using the imported software packages (122) includes:
creating, by the visual model-based app development platform (118), source code (124) of the developed
native app (120),
the method further including:
causing a binary building platform (126) to build at least one binary file (128) corresponding to the source code (124) of the developed native app (120).

9. Computer-implemented method according to claim 8, further including:
transmitting or causing to transmit the source code (124) and/or the respective binary file (128) to a remote software repository (152); and
causing the remote software repository (152) to make the source code (124) and/or the respective binary file (128) available for download.

10. Computer-implemented method according to claim 8 or 9, further including:
transmitting metadata (130) relating to the developed native app (120) to the remote software repository (152) ,
wherein the metadata (130) includes at least one of an app name, an app ID, an app version, source code name, source code ID, respective binary file name, respective binary file ID, API keys, app functionalities, a type of target platform, software package dependencies, updated app functionalities, an updated type of target platform, updated software package dependencies, or any combination thereof.

11. Computer-implemented method according to any one of claims 8 to 10, further including:
causing to transmit or transmitting the respective binary file (128) to a remote app store (154) for download of the native app (120) by a native app user.

12. Computer-implemented method according to any one of claims 8 to 11, further including:
providing the respective binary file (128) to an app user via a machine-readable optical label allowing the app user to download the native app (120) to his/her target platform (140).

13. Computer system (100, 118) arranged and configured to execute the steps of the computer-implemented method according to any one of the preceding claims.

14. A computer-readable medium (160) encoded with executable instructions, that when executed, cause the computer system (100, 118) according to claim 13 to carry out a method according to any one of claims 1 to 12.
